# EUROPEAN PATENT SPECIFICATION

(11) **EP 2 602 075 B1**
(45) Date of publication and mention of the grant of the patent: **09.08.2017**
(21) Application number: 12187620.5
(22) Date of filing: 08.10.2012
(51) Int. Cl.: B27B 5/16, B27G 19/02, B27B 31/06, B23D 59/00

(54) **Chop saw with top table**
Kappsäge mit Oberplatte
Scie à onglet avec établi supérieur

(30) Priority: 09.12.2011 GB 201121188
(43) Date of publication of application: 12.06.2013
(73) Proprietor: Black & Decker Inc., Newark, Delaware 19711 (US)
(72) Inventor: Spinelli, Luigi, Cap 06126 Perugia (IT)
(74) Representative: SBD IPAdmin

(56) References cited:
- EP-A1- 2 014 399
- EP-A2- 1 813 400
- WO-A1-93/17842
- DE-A1- 10 240 123
- DE-U1-202005 007 680
- US-A- 2 488 947
- US-A1- 2003 233 921
- US-A1- 2006 042 444
- US-A1- 2010 269 655
- US-A1- 2011 265 625

## Description

The present invention relates to chop saws, and in particular, to chop saws which can also perform mitre cuts and/or bevel cuts.

EP1813400 discloses a saw according to the preamble of claim 1. It discloses a sliding compound mitre saw with a height adjustable table mounted on top of the motor unit. Such a saw can act either as a sliding compound mitre saw performing bevel cuts, mitre cuts, sliding cuts and chop cuts by pivotal movement of the motor unit above a base when a work piece is placed on the base or a table saw when motor unit is locked in its lowest position and the work piece is passed over the table.

EP1813400 discloses two height adjustment mechanisms for the table mounted on the motor unit. However, it has been found that such designs allow too much sideways movement of the tubular support when the height of the table is being adjusted.

EP2014399 discloses a sliding compound mitre saw with an LED 39 (using the same reference numbers as EP2014399) which shines a light over the blade to cast a shadow on the base assembly which can be sued to indicate the position where the blade will cut a work piece when the work piece is place on the base assembly.

US2003/0233921 shows a chop saw which has an optical system mounted on a fixed guard

Accordingly there is provided a saw in accordance with claim 1.

An embodiment of the present invention will now be described with reference to the accompanying drawings of which:
Figure 1 shows a perspective view of an example of a chop saw with a height adjustable table mounted on the motor unit when the motor unit locked in its lowest position;
Figure 2 shows a partial side view of the saw;

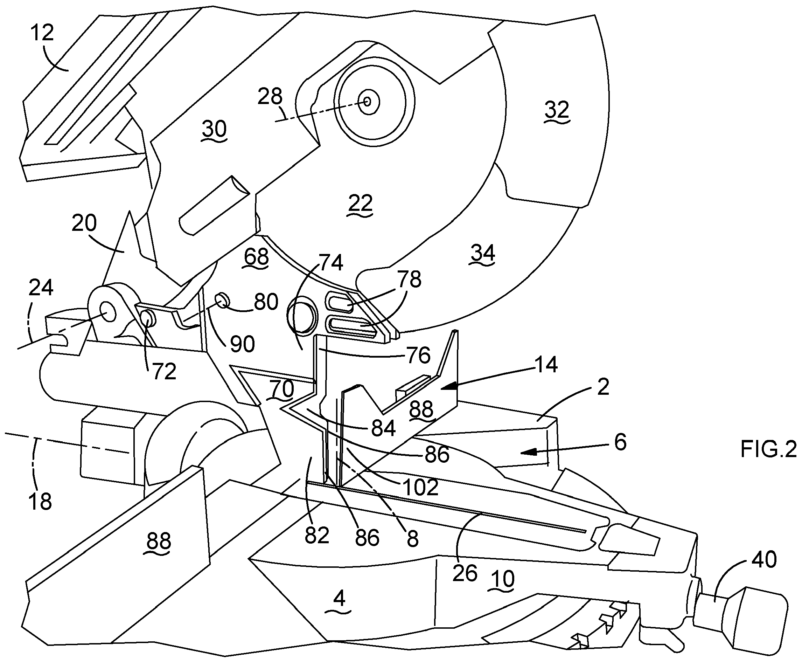

Figure 2 shows a second partial side view of a saw;

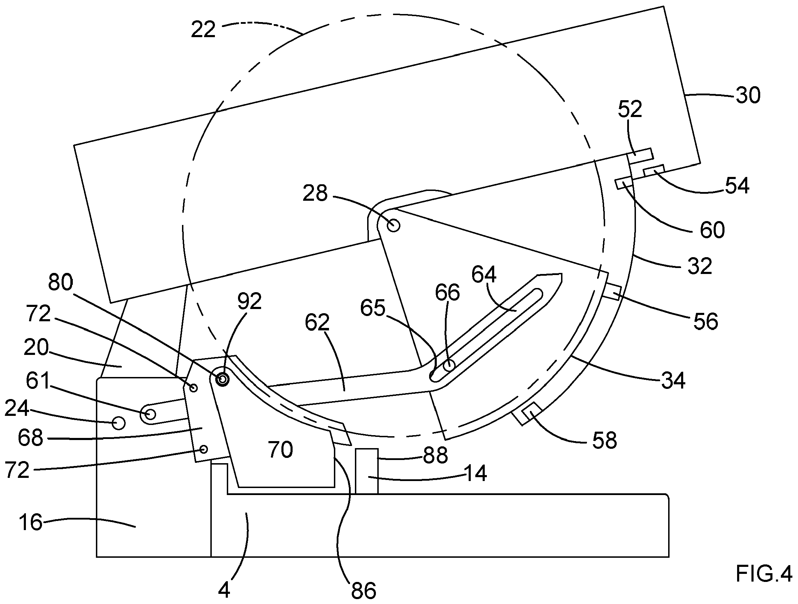

Figure 4 shows a schematic diagram of the guard assembly;

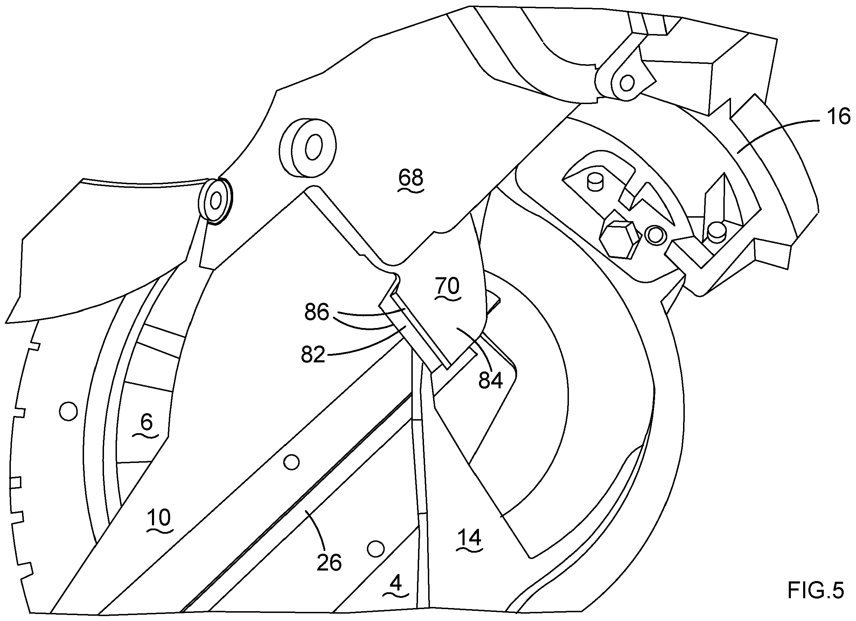

Figure 5 shows a first view of the rear guard assembly when the saw is performing a bevel and mitre cut;

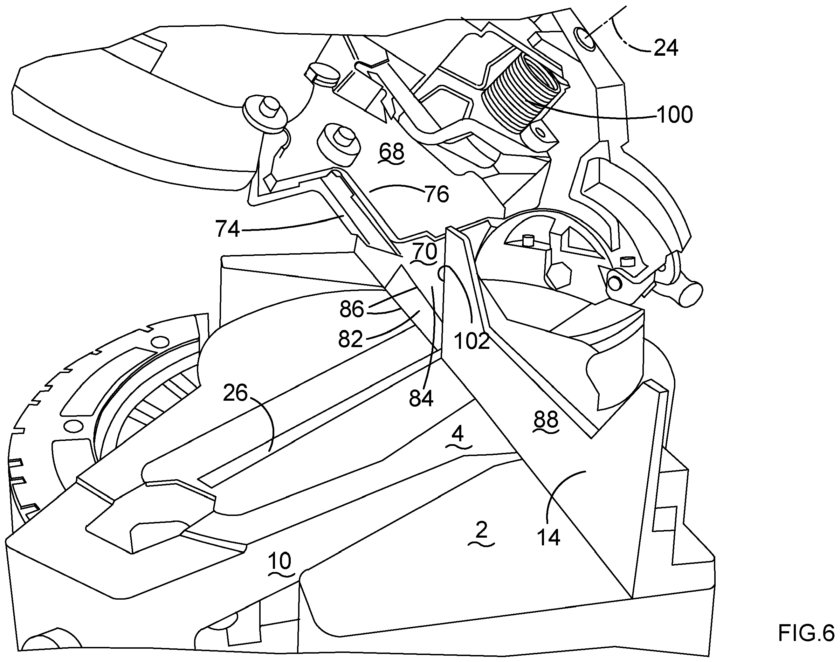

Figure 6 shows a second view of the rear guard assembly when the saw is performing a bevel and mitre cut;

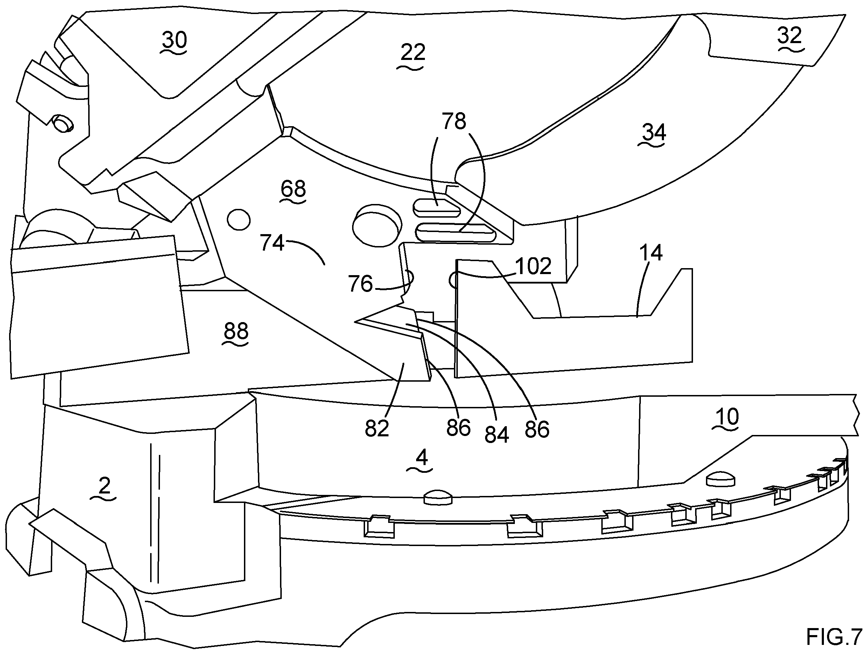

Figure 7 shows a third view of the rear guard assembly when the saw is performing a bevel and mitre cut;

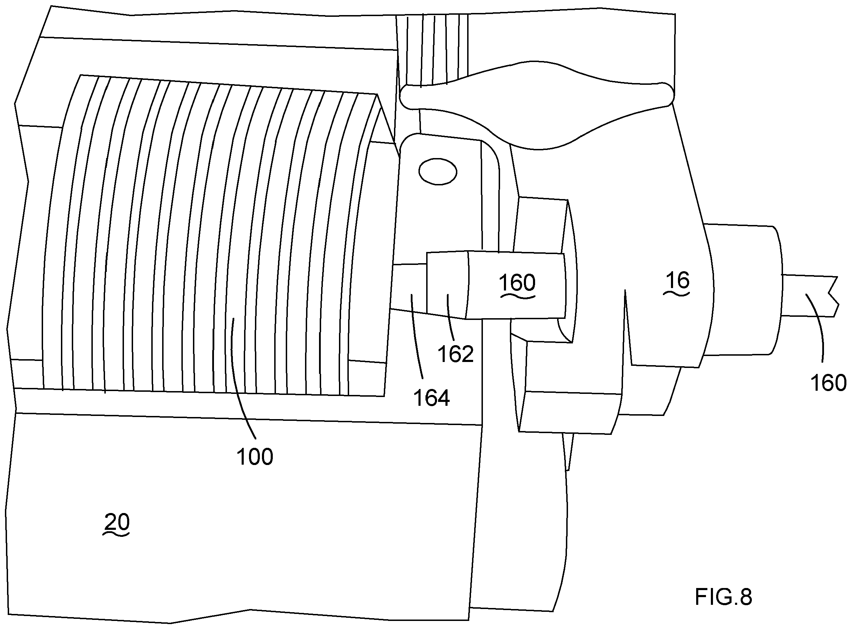

Figure 8 shows the locking mechanism for the motor unit;

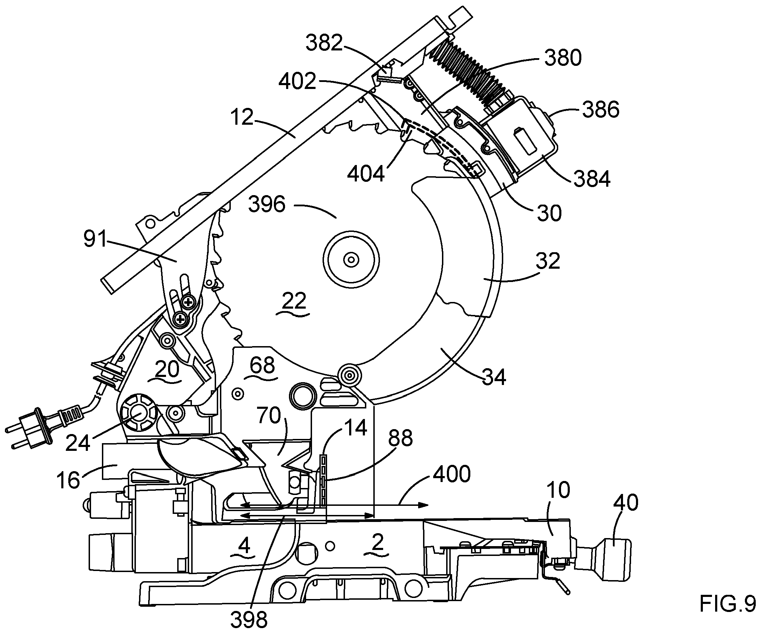

Figure 9 shows a side view of a saw with the front of the fixed guard and sixth slideable guard removed to provide an exposed view of the blade and pivotal guards in accordance with an embodiment of the present invention;

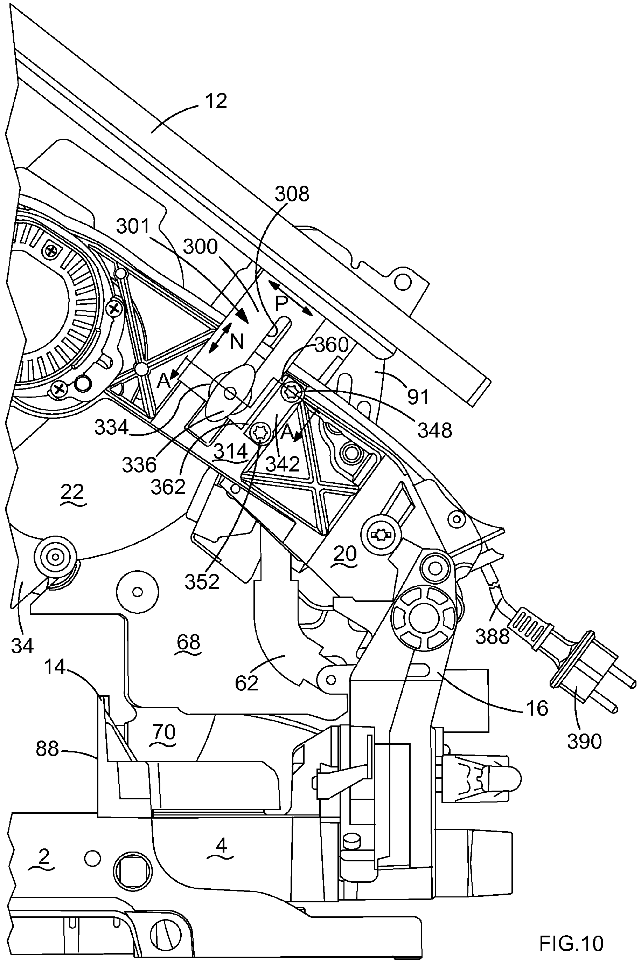

Figure 10 shows a partial side view of the of the saw from the other side;

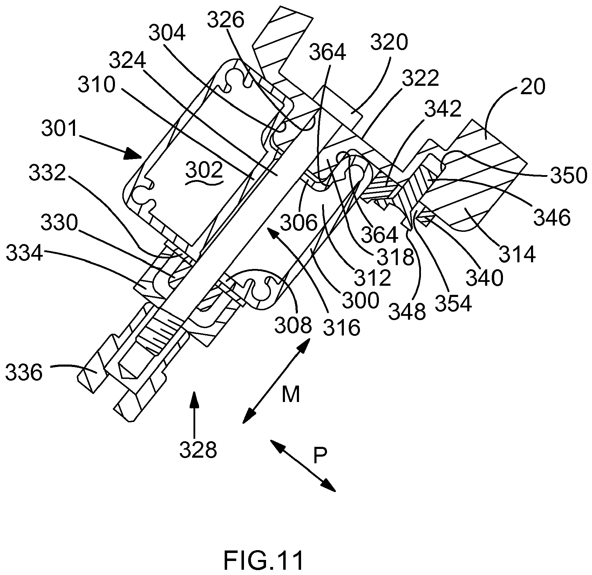

Figure 11 shows a cross sectional view of the tubular support for the table in the directions of Arrows A in Figure 10;

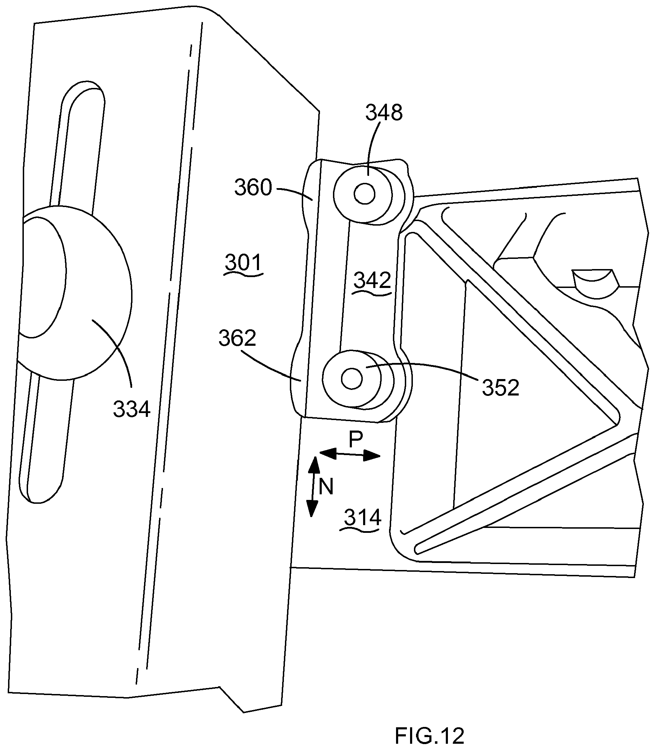

Figure 12 shows a view of the tubular support and sliding mount mounted on the wall of the motor unit only;

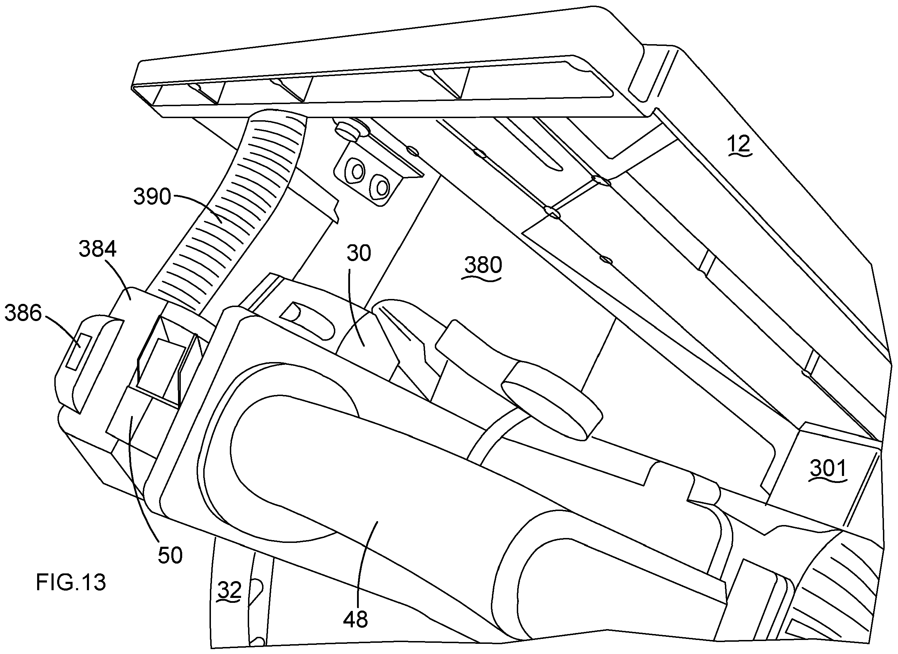

Figure 13 shows a perspective view of the light guide electric switch for the light guide system;

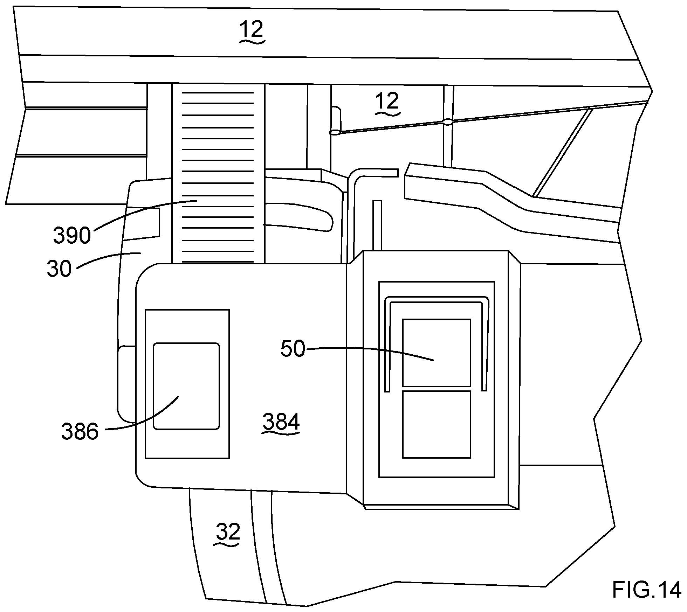

Figure 14 shows a front view of the light guide electric switch for the light guide system;

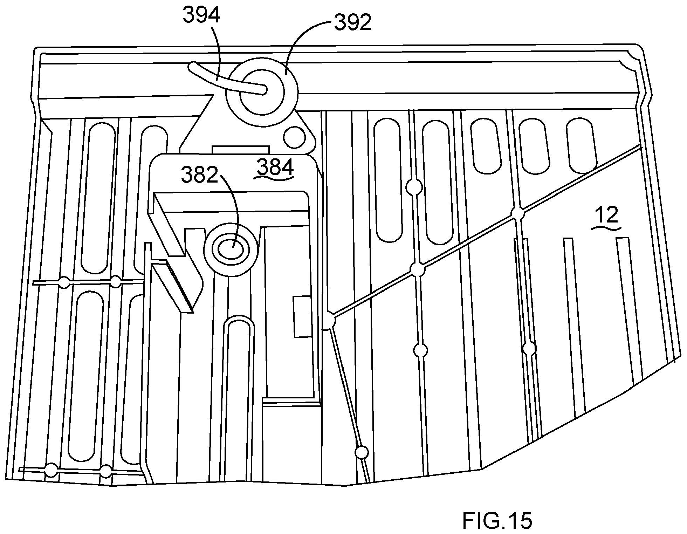

Figure 15 shows a view of the underside of the table with the light source attached; and

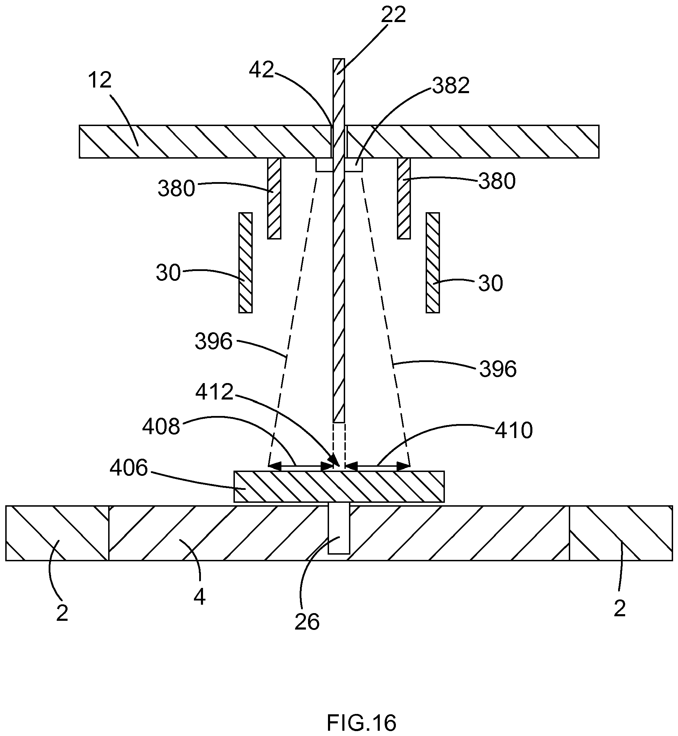

Figure 16 shows a schematic vertical cross sectional view of the saw with the light guide system switch on.

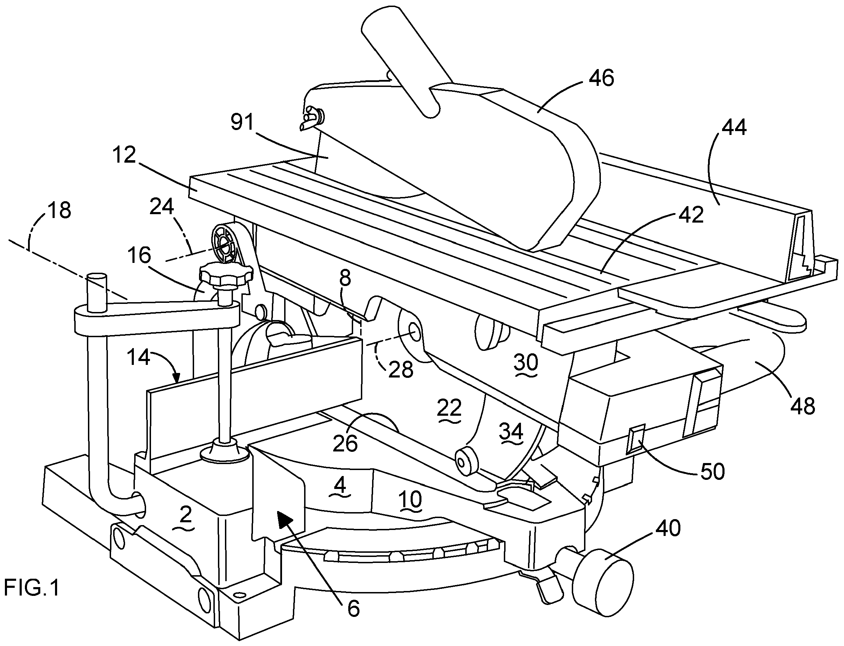

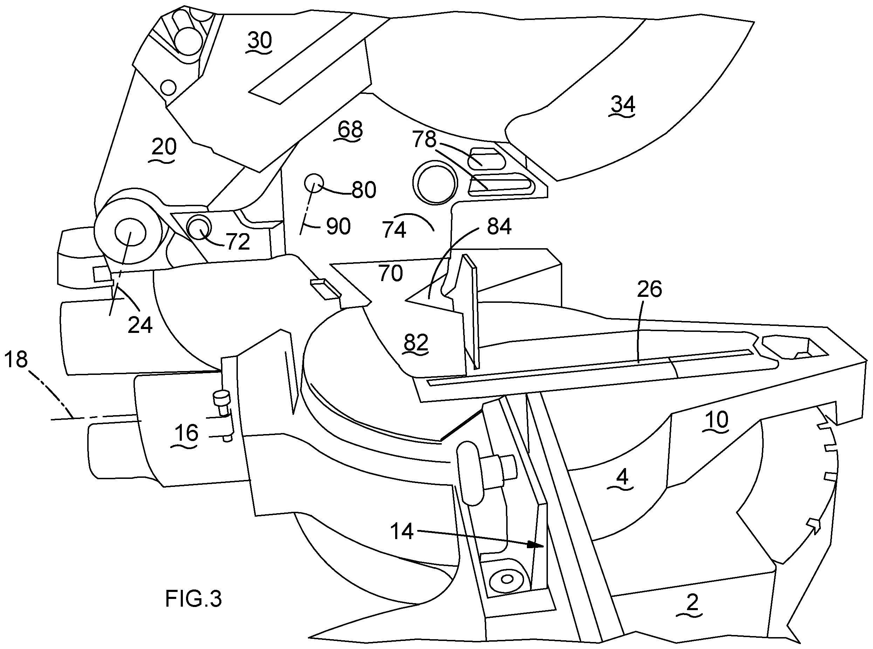

An example of a saw will now be described with reference to Figures 1 to 8.

Referring to Figure 1, there is provided a chop saw with a table 12. The saw comprises a base 2 having a rotatable table 4 mounted within it. The rotatable table 4 can pivot about a vertical axis 8 within the base 2. A locking mechanism 40 can lock the rotatable table 4 in various angular positions within the base 2. An extension arm 10 is rigidly attached to the periphery of the rotatable table 4 and extends forward in well known manner within a recess 6 formed within the base 2. The recess 6 provides a space in which the arm 10 can move when the rotatable table 4 is rotated about the axis 8. The top surface of the base 2, rotatable table 6 and extension arm 10 are flush to provide an overall work surface for a work piece. A slot 26 extends across the rotatable table 104 and along the extension arm 10. The rotation of the rotatable table 4 about the axis 8, in conjunction with a fence 14 fixed to the base 2 and which extends across the rotatable table 4, enables the saw to perform mitre cuts.

Connected to the rear of the rotatable table 4 is a bevel mount 16 which is able to pivot about a horizontal axis 18 in relation to the rotatable table 4, which horizontal axis 18 is parallel to the plane of the work surface of the rotatable table 4. A locking mechanism (not shown) enables the angular position about the axis 18 of the bevel mount 16 to be releasably locked relative to the rotatable table 4. The pivotal movement of the bevel mount 16 about axis 18 in relation to the rotatable table 4 enables the saw to perform bevel cuts.

Pivotally mounted on the bevel mount 16 is a motor unit 20, which comprises a motor (not shown) for rotationally driving a circular saw blade 22 mounted on a drive spindle on the motor unit 20 about an axis 28. The motor unit 20 can pivot on the bevel mount 16 about an axis 24 from a raised first position where the motor unit is remote from the base 2 and rotatable table 4, to a lowered second position where it is in close proximity to the base 2 and rotatable table. The axis 24 is parallel to the axis 28. The slot 26 in the table 4 and arm 10 provides a space within the table 4 and arm 10 into which the cutting edge of the saw blade 22 can pass when the motor unit 20 is pivoted to its lowered position to enable it to pass through a work piece when positioned on the table 4 and arm 10. The motor unit 20 is biased to an upward position by a spring 100. A locking mechanism is mounted on the bevel mount which is capable of locking the motor unit 20 in its lowered second position as shown in Figure 1. The locking mechanism comprises a pin 160 mounted within the bevel mount 16 in an axailly slideable manner as seen in Figure 8. The pin 16 can be slid between a first position where it is disengaged from the motor unit 20, allowing it to freely pivot about axis 24, to a second position when the motor unit 20 is in its lowered second position where its end 162 engages with a groove 164 formed in the side of the motor unit 20 to lock it in its lower position. The end of the pin is tapered in a lengthwise direction to form a frusto conical shape. The groove 164 narrows along its length in order to provide a corresponding tapered shape along its length which can mate with that of the end 162 of the pin 160. By tapering the groove 164 and the end 162 of the pin 160, it ensures that a tight fit is provided between the two when the end of the pin is engaged with the groove 164. The pivotal movement of the motor unit 20 in relation to the bevel mount 16 about axis 24 enables the saw to perform chop cuts.

Mounted on the top of the saw is the table 12 which enables the saw to be also used as a table saw. The table 12 is attached to the top side of the motor unit 20. A slot 42 is formed through the table through which the top section of the circular saw blade 22 projects. When the motor unit 20 is locked in its lowered second position, the table 12 is horizontal. A work piece such as a piece of wood can then be slid across the top of the table 12 to engage with the top section of the saw blade 22 thus enabling the saw to be used as a saw table. A table fence 44 is releaseably attached to the table 12 and which can be used to guide a work piece across the table 12. A table guard 46 is releasably mounted on the table which can surround the top of the saw blade 22 which projects through the table 12 when it is not being used as a table saw. A riving knife 91 is attached to the motor unit 20 and which projects through the slot 42.

The saw comprises a plurality of guards located below the table 12 which are capable of enclosing the cutting edge of the lower section of the saw blade 22 for safety purposes when the saw is in its raised first position when it is not being used to perform chop, mitre, or bevel cuts, or when the saw is being used as a table saw, with the motor unit 20 locked in its lowered second position.

A handle 48 is attached to the motor unit by which a user can grip and pivot the motor unit 20 and the circular saw blade 22 downwards towards the rotatable table 4. An electric switch 50 is mounted adjacent the handle 48 for activating the motor. The switch can operate in two modes of operation. The first mode is when the saw is performing chop, mitre or bevel cuts. In this mode, the switch 50 must be constantly depressed by the operator to keep the motor activated thus ensuring the hand of the operator remains on the handle in contact with the switch. In the second mode, when the saw is being used as a table saw, the switch 50 can be depressed once to activate the motor, the motor remaining activated until the switch is depressed again. This allows the operator to move his hands freely without having to maintain contact with the switch.

The height of the table 12, and hence the amount of saw blade 22 passing through it, can be adjusted vertically. The height adjustment mechanism for the table 12 is the same as that described in EP1813400.

The cutting edge of the lower part of the circular saw blade 22 below the table 12 is surrounded by a guard assembly. The guard assembly comprises a first fixed guard 30 which surrounds the cutting edges of the middle section of the saw blade 22, a forward guard assembly which is capable of surrounding the lower front section of the cutting edge of the cutting blade 22 and a rear guard assembly which is capable of surrounding the lower rear section of the cutting edge of the cutting blade 22.

The first fixed guard 30 is attached to the motor unit 20 and surrounds the cutting edges of the middle section of the circular saw blade 22. The fixed guard 30 remains stationary relative to the motor unit 20.

The forward guard assembly will now be described with reference to figure 4.

Pivotally attached to the first fixed guard 30 is a second forward pivotal guard 32. The second forward pivotal guard 32 pivots about the axis 28 of the circular saw blade 22. The second pivotal forward pivotal guard 32 can freely pivot into and out of in a telescopic manner the fixed guard 30. The second forward pivotal guard 32 is prevented from completely pivoting out of the fixed guard 30 by a catch 52 formed on the second forward pivotal guard 32 which engages with a ledge 54 formed on the fixed guard 30 when the second forward pivotal guard 32 has pivoted to its furthest position outside of the fixed guard 30.

Pivotally attached to the first fixed guard 30 is a third forward pivotal guard 34. The third forward pivotal guard 32 also pivots about the axis 28 of the circular saw blade 22.

The third pivotal forward pivotal guard 34 can pivot into and out of, in a telescopic manner, the second forward pivotal guard 32 and also into and out of the fixed guard 30 when the first forward pivotal guard 32 has moved telescopically inside of the fixed guard 30. The third forward pivotal guard 34 is prevented from completely pivoting out of the second forward pivotal guard 32 by a second catch 56 formed on the third forward pivotal guard 32 which engages with a second ledge 58 formed on the first forward pivotal guard 32 when the second forward guard has pivoted to its furthest position outside of the first forward pivotal guard 32. The third forward pivotal guard 34 is prevented from completely pivoting through the second forward pivotal guard 32 by the second catch 56 formed on the third forward pivotal guard 32 engaging with a third ledge 60 formed on the first forward pivotal guard 32 when the second forward guard has pivoted to its furthest position inside of the first forward pivotal guard 32.

A spring (not shown) biases the third forward pivotal guard 34 downward (clockwise) as shown in figures 1 to 4.

A bar 62 is pivotally attached at one end about axis 61 to the bevel mount 16. An elongate slot 64 is formed along a section of the length of the bar 62 at the other end. A pin 66, rigidly attached to the third forward pivotal guard 34 passes through the slot 64 and which is capable of sliding along the slot 64. The biasing spring acting on the third forward pivotal guard 34 causes the guard to pivot until the pin 66 is at the inner end position 65 of the slot 64 where it remains held by the force of the spring. The pin 66 located within the slot 64 of the bar 62 controls the pivotal movement of the third guard 34 on the motor unit as the motor unit 20 pivots upwards and downwards. When the motor unit 20 is in its upper most raised first pivotal position, the second and third forward pivotal guards 32, 34 surround the cutting edge of the lower front section of circular saw blade 22 as shown in Figure 2. As the motor unit 20 is pivoted downwardly, the bar 62 pushes the pin 66, causing the third forward pivotal guard 34 to telescopically pivot into the second forward pivotal guard 32 until the second catch 56 engages with the third ledge 60. As the motor unit 20 continues to be pivoted downwardly, the bar 62 continues to push the pin 66, causing the third forward pivotal guard 34 together with the second forward pivotal guard via the second catch 56 and third ledge 60, to telescopically pivot into the first fixed guard 30. The slot 64 allows the guard to pivot freely relative to the bar 62, against the biasing force of the spring, if it encounters a work piece located on the base 2 or table 4.

The rear guard assembly will now be described with reference to figure 4.

The rear guard assembly comprises two parts, a fourth rearward fixed guard 68 and a fifth rearward pivotal guard 70.

The fourth rearward fixed guard 68 comprises a U shaped bracket rigidly fixed to the bevel mount 16 via bolts 72 and which surrounds part of the cutting edge of the rear lower section of the blade 22. One side 74 of the U shaped bracket locates along one side of the cutting blade 22, the other side 76 of the U shaped bracket locates along the other side of the cutting blade 22. The fourth rearward fixed guard 68 surrounds the part of the cutting edge of the rear lower section of the blade 22 when the motor unit 20 is in its raised position or its lowered position and all the positions in between, when the motor unit 20 is pivoted about axis 24. A series of elongate holes 78 are formed in one side 74 of the fixed guard 68 to enable a user to view the side of the blade 22 located within the fixed guard 68. The fourth rearward fixed guard 68 is located above the fence 14.

The fifth rearward pivotal guard 68 also comprises a U shaped bracket pivotally mounted within the fourth rearward fixed guard 68 via a bolt 80. A portion of the fifth rearward pivotal guard 70 locates behind the fence 14. The fifth rearward pivotal guard 70 surrounds a part of the cutting edge of the rear lower section of the blade 22 when the motor unit 20 is pivoted about axis 24 to its lowered position. When the motor unit 20 is in its lowest position, one side 82 of the U shaped bracket locates along one side of the cutting blade 22, the other side 84 of the U shaped bracket locates along the other side of the cutting blade 22. The fifth rearward pivotal guard 70 can pivot about axis 90 from a first forward position where the front edges 86 of the bracket are in close proximity to the working surface 88 of the fence, adjacent to the slot formed through the fence 14 through which the blade 22 passes when the motor unit is pivoted about axis 24 to its lowered position, to a second rearward position (clockwise as shown in Figure 4) where the fifth rearward pivotal guard 70 is located further inside of the fourth rearward fixed guard and where the front edges 86 are located a short distance behind the fence 14. A spring 92 biases the fifth rearward pivotal guard 70 to its first position.

The rear guard assembly ensures that the part of the cutting edge of the blade 22 which is located below the fixed guard and behind the fence 14 remains enclosed at all times regardless of the pivotal position of the motor unit 20 relative to the bevel mount 16. When the motor unit 20 is pivoted relative to the bevel mount 16 about axis 24, the fifth rearward pivotal guard 70 remains in a fixed position relative to the fourth rearward fixed guard 68 and bevel mount 16, the pivotal movement of the motor unit 20 about axis 24 having no effect on the pivotal position of the fifth rearward pivotal guard 70. When the motor unit 20 is in its raised position as shown in Figure 2, the whole of the cutting edge of the cutting blade 22 located below the fixed guard 30 is surrounded by the front and rear guard assemblies. When the motor unit 20 is in its lowered position as shown in Figure 1, the whole of the cutting edge of the cutting blade 22 located below the fixed guard 30 is enclosed by being surrounded in part by the front guard assembly and the rear guard assembly with the remaining portion being located within the slot 26 in the table 4 and arm.

The reason for making part of the rear guard assembly pivotal is due to the movement of the bevel mount 16, upon which it is mounted, relative to the base. When the saw performs mitre and/or bevel cuts by pivotal movement of the table 4 about axis 8 and/or pivotal movement of the bevel mount about axis 18, the position of the front edges 86 of the fifth rearward pivotal guard 70 move relative to the edges 102 of the slot formed through the fence 14 through which the blade 22 can pass as the motor unit 20 moves to its lower position, as shown in Figures 5 to 7. This can result, in certain positions, in the edges engaging with the edge 102 of the fence 14 and hence block or hinder the movement of the bevel mount 16 in relation to the base 2. Therefore, by making the part of the rear guard assembly located behind the fence 14 pivotal, the pivotal part can be moved rearwardly slightly by pivotal movement of the fifth rearward pivotal guard 70 to the movement of the bevel mount 16 being hindered or blocked relative to the base 2 whilst still enclosing the blade within the rearguard assembly when the rear guard assembly is moved due to the movement of the bevel mount relative to the base 2 and fence 14. The pivotal movement of the fifth rearward pivotal guard 70 occurs when it engages with the fence 14 as the bevel mount 16 moves.

An embodiment of a saw according to the present invention will now be described with reference to Figures 10 to 16. Where the same features are present in the embodiment, which are present in the example described above, the same reference numbers have been used. The embodiment is the same as the example except for the height adjustment mechanism for the table and the addition of a light guide system.

### Height Adjustment Mechanism

The height adjustment mechanism for the table 12 will now be described with reference to Figures 10 to 12.

The table 12 is moveably mounted on the motor unit 20 using a tubular support 301. The tubular support 301 allows the table 12 to slide up and down on the motor unit 20. The tubular support 301 is rigidly attached to the table and extends in a direction perpendicular to the plane of the working surface of the table 12. The sliding movement of the table 12 is perpendicular to working surface of the table, the sliding movement being vertical with the working surface is horizontal when the motor unit 20 is locked in its lowered second position.

The tubular support 301 comprises a metal tube 300 having a generally rectangular cross section, the precise shape of which is best seen in Figure 11. An inner wall 310 is formed inside of the tube 300 which traverses the width of the tube 300 to form two elongate passageways 302, 312 through the length of the tube 300. Formed externally in a wall of the tube 300 on one side is a trough 304 which runs the length of the tube 300. A first elongate slot 306 is formed in a lengthwise direction in the base of the trough 304. A second elongate slot 308 having the same dimensions as the first is formed in the opposite wall of the tube 300 in a matching aligned position.

The tubular support 301 attaches to a side wall 314 of the motor unit 20 using a bolt 316.

Formed on the side wall 314 of the motor unit is a ridge 318 of similar dimensions to those of the trough 304 on the tubular support 301. When the tubular support 301 is mounted on the wall 314, the ridge 318 locates within the trough 304 as best seen in Figure 11. Formed through the ridge 318 is a circular hole 326 through which the shaft 324 of the bolt 316 passes. The head 320 of the bolt 316 locates against an inner surface 322 of the wall 314, the diameter of the shaft 324 of the bolt 316 being slightly smaller than that of the hole 326 to enable the shaft 324 to pass through it with minimal sideways movement, the diameter of the head 320 being larger than that of the hole 326 to prevent it passing through the hole 326.

The shaft 324 of the bolt 316 extends through the hole 326, then through the first elongate slot 306 and then through the second elongate slot 308. A locking knob assembly 328 (described below) is screwed onto the end of the shaft 324 to sandwich the tubular support 301 against the wall 314 of the motor unit 20.

The locking knob assembly 328 comprises a self-locking nut 330 (with nylon insert) being screwed onto the shaft 324 of the bolt 316. The nut 330 is screwed onto the shaft 324 sandwiching a washer 332 between the nut 330 and the outer wall of the tubular support 301. The nut 330 is screwed onto to the shaft to a predetermine position where a small predetermined compression force is applied to the tubular support 301 against the wall 314 of the motor unit. This allows the tubular support 301 limited movement in a direction away from or towards the wall 314 of the motor unit (Arrow M). A cup shaped washer 334 surrounds, but does not engage with the nut 330 which abuts against the washer 332. A knob 336 is then screwed onto the shaft 324 to sandwich the cup shaped washer 334 against the washer 332. Tightening of the knob 336 results in the knob 336 pushing the tubular support 301 against the wall 314 of the motor unit 20, via the cup shaped washer 334 to fix its position due to friction. The force applied by the knob is dependent on the amount by which the operator screws the knob 336 onto the shaft 324. The slackening of the knob 336 releases the tubular support 301 by allowing the cup shaped washer 334 to move away from the tubular support. The limited movement of the tubular support 301 in a direction away from or towards the wall 314 of the motor unit (Arrow M) allowed by the self locking nut 330 allows the tubular support 301 to slide in a direction (Arrow N) parallel to its longitudinal axis, relative to the motor unit 20, the shaft 324 of the bolt 316 travelling along the lengths of the two elongate slots 306, 308 as it does so. The direction of movement of the tubular support 301 is controlled by the ridge 318 sliding within the trough 304, the ridge 318 being prevented from leaving the trough 304 by the self locking nut 330. However, the self-locking nut 330 prevents excessive movement of the tubular support 301 in a direction away from or towards the wall 314 of the motor unit (Arrow M) whilst the tubular support 301 is slid in the direction of Arrow N.

Sideways (Arrow P) movement of the tubular support 301 is prevented by the ridge 318 located in the trough 304. However, due to tolerances during manufacture, it has been found that limited sideways (Arrow P) movement of the tubular support 301 occurs, allowing either a limited linear movement or a twisting movement relative to the motor unit 20. The twisting movement allows the tubular support 301 to be clamped to the side wall 314 of the motor unit 20 in a limited range of angular positions. This results in the working surface of the table 12 being non horizontal when the tubular support 301 is clamped in a non vertical position, when the motor unit 20 is located in its lowered second position.

In order to overcome this problem, there is provided a sliding support 340 which is mounted on the side wall 314 of the motor unit 320 and which engages with the side of the tubular support 301.

The sliding support 340 comprises a body 342 having two oval holes 354 formed through it. A shaft 346 of a first bolt 348 passes through one of the holes 354 and screws into a threaded bore 350 formed in the side wall 314 of the motor unit 20. A shaft of a second bolt 352 passes through the other hole and screws into a second threaded bore formed in the side wall of the motor unit 20. The dimension of the shafts of the two bolts 348, 352 are smaller than those of the holes 354, allowing the body 340 to be moved sideways (Arrow P) relative to position of the shafts 346. The dimensions of the head of the bolts 348, 352 are larger than those of the holes 354, thus preventing the heads from passing through the holes 354. When the bolts 348, 352 are screwed tightly into the threaded bores 350, the heads of the bolts 348, 352 abut against and clamp the body 342 against the sidewall 314 of the motor unit 20, preventing movement of the body 342 relative to the wall 314. However, when the bolts 348, 352 are screwed loosely into the threaded bores 350, the heads of the bolts 348, 352 locate a small distance away from the body 342, allowing the body 342 to slide sideways (Arrow P), the shafts of the bolts 348, 352 moving within the holes 354 as it does so.

Formed along one side of the body 342, facing towards the tubular support 301, are two projections 360, 362. The two projections 360, 362 engage with the side of the tubular support 301. When the tubular support 301 has been mounted on the motor unit 20 with the ridge 318 located within the trough 304 using the self locking nut 330, the washer 332 and bolt 316, during manufacture, the sliding support 340 is mounted onto the sidewall 314 of the motor unit 20 using the two bolts 348, 352. However, the bolts 348, 352 are only loosely screwed into the bores 350 allowing sideways movement of the body 342 on the wall 314. The body 342 is slid towards the tubular support 301 until the two projections 360, 362 engage with the side of the tubular support 301 and push a sidewall 364 of the ridge 318 into engagement with a side wall 366 of the trough 304. A predetermined amount of pressure is exerted by the siding support 340 in the direction of Arrow P on the tubular support 301 and hence the side wall 366 of the trough 304 on the ridge 318 to ensure that sideways (Arrow P) movement of the tubular support 301 is prevented whilst allowing it to slide vertically (Arrow N) when the height of the table 12 needs to be adjusted. The two bolts 348, 352 are then screwed tightly into the bores 350, causing the sliding support 340 to be clamped firmly to the wall 314 of the motor unit 20 and thus preventing any sliding movement. The use of two projections 360, 362 provides two points of contact only between the sliding support 340 and the tubular support 301, thus providing a firm and stable interaction between the two whilst preventing any relative movement between the two when they are engaged, The two projections hold the trough 304 of the tubular support 301 against the ridge in a firm manner, thus maintaining it in a vertical position.

### Light Guide System

The light guide system will now be described with reference to Figures 9 and 13 to 16. The light guide system is used when the saw is being used for chop, mitre or bevel cuts with the work piece being located on the base 2, rotatable table 4 and arm 10.

Rigidly attached to the under side of the table is a tubular sixth slideable guard 380 (as bet seen in Figure 15). The sixth slideable guard 380 is rectangular in cross section but of smaller dimensions that that of the fixed guard 30. The sixth slideable guard 380 locates inside of the fixed guard and slides in and out of the fixed guard 30 in a telescopic manner as the height of the table 12 above the motor unit 20 is adjusted. The sixth slideable guard 380 ensures that the portion of the blade 22 located between the table 12 and the fixed guard 30 remains enclosed at all times regardless of the height of the table 12 above the motor unit 20.

Located on the underside of the table 12 inside the sixth slideable guard 380 adjacent the front end of the sixth slideable guard 380 is a light source 382 comprising a white LED. The light source 382 is located directly above the edge of the cutting blade 22 and can shine a beam of light 396 towards the edge of the cutting blade 22.

An electronics housing 384 is mounted on the motor unit 20 adjacent the handle 48. Inside the housing 384 are the control electronics for the motor and the power supply for the light source 382. Mounted on the front of the housing 384 is an electric ON/OFF switch 50 for switching the motor on or off, the motor being power by the control electronics. Mounted adjacent the ON/OFF switch 50 is a light switch 386 which is used by the operator to switch the light source 382 on or off. The power supply for the light source 382 and the control electronics is supplied from a 240v AC power supplied via a cable 388 and plug 390.

Connected between the housing 384 and the underside of the table 12 is a telescopic corrugated plastic tube 392. An electric cable 394 connects between the light source 382 and the power supply for the light source by passing through the side of the housing 384, through the corrugated plastic tube 392, underneath the table 12 whilst enclosed by a plate 394. Sufficient electric cable 394 is located within the corrugated plastic tube to enable the table to be raised to its highest position relative to the motor unit 20, the corrugated plastic tube 392 stretching as it does so.

The guide system is used when the saw is being used for chop, mitre or bevel cuts with the work piece being located on the base 2, rotatable table 4 and arm 10. In order to use it, the operator switches on the light source 382 using the light switch 386. The motor unit 20 is in initially in its raised first position as shown in Figure 9. The light source emits a diverging beam of light 396 towards the edge of the cutting blade 22, the beam of light passing on both sides of the blade 22. As the whole of the cutting edge of the cutting blade 22 located below the fixed guard 30 is surrounded by the front and rear guard assemblies when the motor unit 20 is in its raised position, the light beam 396 encounters the inside wall of the guards 32, 34 of the front blade guard assembly whilst passing through the guards 68, 70 of the rear guard assembly. As such, only the area below the rear guard assembly designated 398 in Figure 9 of the base, fence 14 and rotatable table 4 is illuminated by the light source 782. When the motor unit 20 is pivoted towards its lowered second position, the guards 32, 34 of the front guard assembly pivot into the fixed guard 30. When this occurs, the area below fixed guard 30 designated 400 in Figure 9 of the base 2, fence 14 and rotatable table 4 is illuminated by the light source 782. When the second and third forward pivotal guards 32, 34 have pivoted to their maximum position inside if the fixed guard they are located at positions 402 and 404 respectively. As such, they do not interfere with the light beam 396 inside of the fixed guard 30.

In use, a work piece 406 (see Figure 16) is placed on the rotatable table 4 and base 2. As the motor unit 20 is pivoted towards the work piece 406 to cut it, the pivotal guards 32, 34 of the front guard assembly, pivot into the fixed guard and out of the way of the blade 22 and the light beam 396. The light beam 396 shines past both sides of the blade 22 and illuminates the top of the work piece 406 in two areas 408, 410. However, the blade 22 casts a shadow 412 on the work piece 406 as it is positioned between the light source 382 and the work piece. The shadow 412 is indicative of the position where the cutting blade 22 will cut the work piece 406 when it comes into contact with the work piece 406. The operator can adjust the work piece 406 using the shadow 412 to ensure the correct part of the work piece 406 is cut. The two illuminated areas 408, 410 provide increased visibility for the operator of the work piece and the cutting operation.

## Claims

1. A saw comprising:
a base (2);
a first table (4) rotatably mounted about a vertical axis (8) within the base (4);
a bevel mount (16) pivotally mounted about a horizontal axis (18) on the edge of the table (4);
a motor unit (20) pivotally mounted on the bevel mount to allow the motor unit to pivot from a first raised position towards the table to a second lowered position;
a saw blade (22) rotatably mounted on and capable of being rotationally driven by the motor unit (20);
a second table (12) mounted on the motor unit (20) having a slot (42) formed through it through which the top section of the circular saw blade (22) is capable of projecting; and
a guard assembly attached to the motor unit (20 for surrounding at least part of the cutting edge of the cutting blade (22);
wherein the guard assembly comprises a fixed guard;
a forward guard assembly comprising at least one pivotal guard (32) which is capable of pivoting between a first position where it surrounds part of the cutting edge of the lower forward portion of the cutting blade (22) below the fixed guard (30) and a second position where it locates at least in part inside of the fixed guard (30);
a rear guard assembly (68, 70) mounted below the fixed guard (30);
**characterised in that** there is provided a light source (382) mounted to the underside of the second table (12) above the edge of the cutting blade (22) and which is capable of shining a beam of light (396) towards the edge of the blade (22), the beam of light (396) passing on both sides of the blade (22);
the rear guard assembly (68, 70) mounted on the bevel mount (16) below the fixed guard (30) and which surrounds part of the cutting edge of the lower rear portion of the cutting blade (22), wherein at least part of the beam of light (396) can pass on both sides of the blade (22) inside of the rear guard assembly and shine onto the base (2) and first table (4).

2. A saw as claimed in claim 1 wherein, when the at least one pivotal guard (32) is located in its second position, the light source (382) is capable of shining a beam of light (396) towards the edge of the blade (22), the beam of light (396) passing on both sides of the blade (22) and shining onto the base (2) and first table (4).

3. A saw as claimed in either of claims 1 or 2 wherein, when the at least one pivotal guard (32) is located in its first position, the light source (382) is capable of shining a beam of light (396) towards the edge of the blade (22), the beam of light (396) passing on both sides of the blade (22) and shining onto the inside wall of the at least one pivotal guard (32).

4. A saw as claimed in any one of claims 1 to 3 wherein there is provided a guard actuation mechanism (62) which automatically moves the at least one pivotal guard (32) from its first position to its second position when the motor unit (20) pivots from its first raised position towards the first table (4) to its second lowered position.

5. A saw as claimed in any one of claims 1 to 4 wherein the forward guard assembly comprises two pivotal guards (32, 34) which are capable of pivoting between a first position where the two guards (32, 34) surround part of the cutting edge of the lower forward portion of the cutting blade (22) below the fixed guard (30) and a second position where one pivotal guard (32) locates at least in part inside of the fixed guard (30) and the second pivotal guard (34) locates at least in part inside the first pivotal guard (32) in a telescopic manner.

6. A saw as claimed in any one of claims 1 to 5 wherein the rear guard assembly comprises a pivotal guard (70) pivotally mounted on the bevel mount (16) and capable of pivoting through a range of angular positions relative to the bevel mount (16), the beam of light being able to pass inside of the rear guard assembly (68, 70) and shine onto the base (2) and first table (4) when the pivotal guard (70) is located in any angular position relative to the bevel mount (16).

7. A saw as claimed in claim 6 wherein the rear guard assembly comprises a fixed guard (68) rigidly attached to the bevel mount (16) and which surrounds part of the cutting edge of the lower rear portion of the cutting blade (22), the pivotal guard (70) being pivotally attached to the fixed guard (68).

8. A saw as claimed in any one of claims 1 to 7 wherein the second table (12) is mounted via a height adjustment mechanism on the motor unit to enable it to be raised or lowered relative to the motor unit (20), and wherein there is provided a table guard (380) which surrounds at least part of the cutting edge of the blade (22) and which is attached to the under side of the second table (12) and which telescopes inside and out of the fixed guard (30) as the second table (12) is raised or lowered, the light source (382) being mounted to the underside of the second table (12) inside of the table guard (380).

9. A saw as claimed in any one of claims 1 to 8 wherein there is provided a power supply for the light source (382) being mounted on the motor unit (20), an electric cable passing between the power supply and the light source (382) via a telescopic tube (392) which connects between the motor unit (20) and the second table (12).

## Patentansprüche

1. Säge, umfassend:
eine Basis (2);
einen ersten Tisch (4), der drehbar um eine vertikale Achse (8) innerhalb der Basis (4) angebracht ist;
eine Kegelanbringung (16), die schwenkbar um eine horizontale Achse (18) an der Kante des Tischs (4) angebracht ist;
eine Motoreinheit (20), die schwenkbar an der Kegelanbringung angebracht ist, um es der Motoreinheit zu ermöglichen, aus einer ersten angehobenen Position zum Tisch hin zu einer zweiten abgesenkten Position zu schwenken;
ein Sägeblatt (22), das drehbar an der Motoreinheit angebracht ist und drehbar durch die Motoreinheit (20) angetrieben werden kann;
einen zweiten Tisch (12), der an der Motoreinheit (20) angebracht ist, mit einem Schlitz (42), der dort hindurch ausgebildet ist, durch den der obere Teilabschnitt des kreisförmigen Sägeblatts (22) vorstehen kann;
eine Schutzbaugruppe, die an der Motoreinheit (20) angebracht ist, zum Umgeben von zumindest einem Teil der Schneidkante des Schneidblatts (22);
wobei die Schutzbaugruppe einen feststehenden Schutz umfasst;
eine vordere Schutzbaugruppe, umfassend zumindest einen schwenkbaren Schutz (32), der zwischen einer ersten Position, in der er einen Teil der Schneidkante des unteren vorderen Abschnitts des Schneidblatts (22) unterhalb des feststehenden Schutzes (30) umgibt, und einer zweiten Position schwenken kann, in der er sich zumindest teilweise innerhalb des feststehenden Schutzes (30) befindet;
eine hintere Schutzbaugruppe (68, 70), die unterhalb des feststehenden Schutzes (30) angebracht ist;
**dadurch gekennzeichnet, dass** eine Lichtquelle (382) vorgesehen ist, die an der Unterseite des zweiten Tischs (12) über der Kante des Schneidblatts (22) angebracht ist und einen Lichtstrahl (396) zur Kante des Blatts (22) hin aussenden kann, wobei der Lichtstrahl (396) auf beiden Seiten des Blatts (22) verläuft;
wobei die hintere Schutzbaugruppe (68, 70) an der Kegelanbringung (16) unterhalb des feststehenden Schutzes (30) angebracht ist und einen Teil des Schneidblatts des unteren hinteren Abschnitts des Schneidblatts (22) umgibt, wobei zumindest ein Teil des Lichtstrahls (396) auf beiden Seiten des Blatts (22) innerhalb der hinteren Schutzbaugruppe verlaufen und auf die Basis (2) und den Tisch (4) scheinen kann.

2. Säge nach Anspruch 1, wobei, wenn sich der zumindest eine schwenkbare Schutz (32) in seiner zweiten Position befindet, die Lichtquelle (382) einen Lichtstrahl (396) zur Kante des Blatts (22) hin aussenden kann, wobei der Lichtstrahl (396) auf beiden Seiten des Blatts (22) verläuft und auf die Basis (2) und den ersten Tisch (4) scheint.

3. Säge nach einem der Ansprüche 1 oder 2, wobei, wenn sich der zumindest eine schwenkbare Schutz (32) in seiner ersten Position befindet, die Lichtquelle (382) einen Lichtstrahl (396) zur Kante des Blatts (22) hin aussenden kann, wobei der Lichtstrahl (396) auf beiden Seiten des Blatts (22) verläuft und auf die Innenwand des zumindest einen drehbaren Schutzes (32) scheint.

4. Säge nach einem der Ansprüche 1 bis 3, wobei ein Schutzbetätigungsmechanismus (62) vorgesehen ist, der den zumindest einen schwenkbaren Schutz (32) automatisch aus seiner ersten Position zu seiner zweiten Position bewegt, wenn die Motoreinheit (20) aus ihrer ersten angehobenen Position zum ersten Tisch (4) hin zu ihrer zweiten abgesenkten Position schwenkt.

5. Säge nach einem der Ansprüche 1 bis 4, wobei die vordere Schutzbaugruppe zwei schwenkbare (32, 34) Schutze umfasst, die zwischen einer ersten Position, in der die zwei Schutze (32, 34) einen Teil der Schneidkante des unteren vorderen Abschnitts des Schneidblatts (22) unterhalb des feststehenden Schutzes (30) umgeben, und einer zweiten Position können, in der sich ein schwenkbarer Schutz (32) zumindest teilweise innerhalb des feststehenden Schutzes (30) anordnet und sich der zweite Schutz (34) teleskopartig zumindest teilweise innerhalb des ersten schwenkbaren Schutzes (32) anordnet.

6. Säge nach einem der Ansprüche 1 bis 5, wobei die hintere Schutzbaugruppe einen schwenkbaren Schutz (70) umfasst, der an der Kegelanbringung (16) angebracht ist und durch einen Bereich von Winkelpositionen bezüglich der Kegelanbringung (16) schwenken kann, wobei der Lichtstrahl innerhalb der hinteren Schutzbaugruppe (68, 70) verlaufen und auf die Basis (2) und den ersten Tisch (4) scheinen kann, wenn sich der schwenkbare Schutz (70) in jeglicher Winkelposition bezüglich der Kegelanbringung (16) befindet.

7. Säge nach Anspruch 6, wobei die hintere Schutzbaugruppe einen feststehenden Schutz (68) umfasst, der starr an der Kegelanbringung (16) angebracht ist und einen Teil der Schneidkante des unteren hinteren Abschnitts des Schneidblatts (22) umgibt, wobei der schwenkbare Schutz (70) schwenkbar am feststehenden Schutz (68) angebracht ist.

8. Säge nach einem der Ansprüche 1 bis 7, wobei der zweite Tisch (12) über einen Höheneinstellmechanismus auf der Motoreinheit angebracht ist, um zu ermöglichen, dass er bezüglich der Motoreinheit (20) angehoben oder abgesenkt wird, und wobei ein Tischschutz (380) vorgesehen ist, der zumindest einen Teil der Schneidkante des Blatts (22) umgibt, und der an der Unterseite des zweiten Tischs (12) angebracht ist und sich teleskopartig in den und aus dem feststehenden Schutz (30) bewegt, wenn der zweite Tisch (12) angehoben oder abgesenkt wird, wobei die Lichtquelle (382) an der Unterseite des zweiten Tischs (12) innerhalb des Tischschutzes (380) angebracht ist.

9. Säge nach einem der Ansprüche 1 bis 8, wobei eine Stromversorgung für die Lichtquelle (382), die an der Motoreinheit (20) angebracht ist, vorgesehen ist, wobei ein Stromkabel zwischen der Stromversorgung und der Lichtquelle (382) über ein Teleskoprohr (392) verläuft, das zwischen der Motoreinheit (20) und dem zweiten Tisch (12) verbindet.

## Revendications

1. Scie comprenant :
une base (2) ;
une première table (4) montée à rotation autour d'un axe vertical (8) dans la base (4) ;
une monture biseautée (16) montée à pivotement autour d'un axe horizontal (18) sur le bord de la table (4) ;
une unité motrice (20) montée à pivotement sur la monture biseautée pour permettre à l'unité motrice de pivoter d'une première position relevée vers la table à une seconde position abaissée ;
une lame de scie (22) montée à rotation sur l'unité motrice (20) et capable d'être entraînée en rotation par celle-ci ;
une seconde table (12) montée sur l'unité motrice (20) ayant une fente (42) formée à travers celle-ci et à travers laquelle la section supérieure de la lame de scie circulaire (22) est capable de faire saillie ; et
un ensemble de garde fixé à l'unité motrice (20) pour entourer au moins une partie du tranchant de la lame de coupe (22) ;
dans laquelle l'ensemble de garde comprend une garde fixe ;
un ensemble de garde avant comprenant au moins une garde pivotante (32) qui est capable de pivoter entre une première position où elle entoure une partie du tranchant de la partie avant inférieure de la lame de coupe (22) en dessous de la garde fixe (30) et une seconde position dans laquelle elle se situe au moins en partie à l'intérieur de la garde fixe (30) ;
un ensemble de garde arrière (68, 70) monté en dessous de la garde fixe (30) ;
**caractérisée en ce qu'**il est prévu une source de lumière (382) montée sur la partie inférieure de la seconde table (12) au-dessus du tranchant de la lame de coupe (22) et qui est à même de faire briller un faisceau de lumière (396) vers le tranchant de la lame (22), le faisceau de lumière (396) passant sur les deux côtés de la lame (22) ;
l'ensemble de garde arrière (68, 70) monté sur la monture biseautée (16) en dessous de la garde fixe (30) et qui entoure une partie du tranchant de la partie arrière inférieure de la lame de coupe (22), dans laquelle au moins une partie du faisceau de lumière (396) peut passer sur les deux côtés de la lame (22) à l'intérieur de l'ensemble de garde arrière et briller sur la base (2) et la première table (4).

2. Scie selon la revendication 1, dans laquelle, lorsque la au moins une garde pivotante (32) est située dans sa seconde position, la source de lumière (382) est capable de faire briller un faisceau de lumière (396) vers le tranchant de la lame (22), le faisceau de lumière (396) passant sur les deux côtés de la lame (22) et brillant sur la base (2) et la première table (4).

3. Scie selon l'une ou l'autre des revendications 1 ou 2, dans laquelle, lorsque la au moins une garde pivotante (32) est située dans sa première position, la source de lumière (382) est capable de faire briller un faisceau de lumière (396) vers le tranchant de la lame (22), le faisceau de lumière (396) passant sur les deux côtés de la lame (22) et brillant sur la paroi interne de la au moins une garde pivotante (32).

4. Scie selon l'une quelconque des revendications 1 à 3, dans laquelle il est prévu un mécanisme d'actionnement de garde (62) qui déplace automatiquement la au moins une garde pivotante (32) de sa première position à sa seconde position lorsque l'unité motrice (20) pivote de sa première position relevée vers la première table (4) à sa seconde position abaissée.

5. Scie selon l'une quelconque des revendications 1 à 4, dans laquelle l'ensemble de garde avant comprend deux gardes pivotantes (32, 34) qui sont capables de pivoter entre une première position où les deux gardes (32, 34) entourent une partie du tranchant de la partie avant inférieure de la lame de coupe (22) en dessous de la garde fixe (30) et une seconde position où une garde pivotante (32) se situe au moins en partie à l'intérieur de la garde fixe (30) et la seconde garde pivotante (34) se situe au moins en partie à l'intérieur de la première garde pivotante (32) de manière télescopique.

6. Scie selon l'une quelconque des revendications 1 à 5, dans laquelle l'ensemble de garde arrière comprend une garde pivotante (70) montée à pivotement sur la monture biseautée (16) et capable de pivoter dans une plage de positions angulaires par rapport à la monture biseautée (16), le faisceau de lumière étant à même de passer à l'intérieur de l'ensemble de garde arrière (68, 70) et de briller sur la base (2) et la première table (4) lorsque la garde pivotante (70) est située dans une position angulaire quelconque par rapport à la monture biseautée (16).

7. Scie selon la revendication 6, dans laquelle l'ensemble de garde arrière comprend une garde fixe (68) fixée de manière rigide à la monture biseautée (16) et qui entoure une partie du tranchant de la partie arrière inférieure de la lame de coupe (22), la garde pivotante (70) étant fixée à pivotement à la garde fixe (68).

8. Scie selon l'une quelconque des revendications 1 à 7, dans laquelle la seconde table (12) est montée via un mécanisme d'ajustement en hauteur sur l'unité motrice pour lui permettre d'être soulevée ou abaissée par rapport à l'unité motrice (20), et dans laquelle il est prévu une garde de table (380) qui entoure au moins une partie du tranchant de la lame (22) et qui est fixée à la partie inférieure de la seconde table (12) et qui se télescope à l'intérieur et à l'extérieur de la garde fixe (30) lorsque la seconde table (12) est soulevée ou abaissée, la source de lumière (382) étant montée sur la partie inférieure de la seconde table (12) à l'intérieur de la garde de table (380).

9. Scie selon l'une quelconque des revendications 1 à 8, dans laquelle il est prévu une alimentation en énergie pour la source de lumière (382) qui est montée sur l'unité motrice (20), un câble électrique passant entre l'alimentation en énergie et la source de lumière (382) via un tube télescopique (392) qui se connecte entre l'unité motrice (20) et la seconde table (12).
